# EUROPEAN PATENT SPECIFICATION

(11) **EP 3 548 790 B1**
(45) Date of publication and mention of the grant of the patent: **29.12.2021**
(21) Application number: 18701526.8
(22) Date of filing: 05.01.2018
(51) Int. Cl.: F16L 58/14, F16L 37/12, F16L 59/18, F01N 13/14, F16L 23/08, F16L 58/18, F01N 13/18

(54) **CLAMPING APPRATUS AND METHOD OF USE THEREOF**
KLEMMVORRICHTUNG UND VERFAHREN ZUR VERWENDUNG DAVON
APPAREIL DE SERRAGE ET PROCÉDÉ D'UTILISATION DE CELUI-CI

(30) Priority: 06.01.2017 GB 201700197
(43) Date of publication of application: 09.10.2019
(73) Proprietor: Teconnex Ltd, Keighley, Yorkshire BD21 4LG (GB)
(72) Inventor: BROWN, Ian, Keighley, Yorkshire BD21 4LG (GB)
(74) Representative: Tomkinson, Alexandra
(86) International application number: PCT/GB2018/050018
(87) International publication number: WO 2018/127700

(56) References cited:
- EP-A1- 2 884 145
- JP-A- H0 893 976
- JP-A- H03 292 489
- US-A- 6 070 911
- US-A1- 2010 081 558
- US-A1- 2011 074 150

## Description

This invention relates to clamping apparatus and to a method of use of a clamping apparatus.

Although the following description refers almost exclusively to clamping apparatus in the form of a V-Clamp, it will be appreciated by persons skilled in the art that the clamping apparatus can include any apparatus that allows the clamping of two or more items together, such as for example, a ring clamp, a band clamp, a G-coupling, a slip joint and/or the like.

A conventional V-Clamp typically consists of an outer band or strap which is substantially annular in shape having two opposing ends, each end is provided with a loop in the band or strap. A trunnion with an adjustable nut and bolt is provided between the two opposing loops to allow adjustment of the band size in use, thereby allowing the band to be easily located around and/or removed from two pipe ends being joined together by the V-Clamp in use. A series of profiled segments are welded onto an inner surface of the outer band or strap to ensure secure engagement of the clamp with at least one of the pipe ends in use. This type of clamp is typically formed from Stainless Steel and is used for clamping together items, such as exhaust pipes or turbocharger pipes, that are exposed to relatively high operating temperatures, such as 500°C or greater.

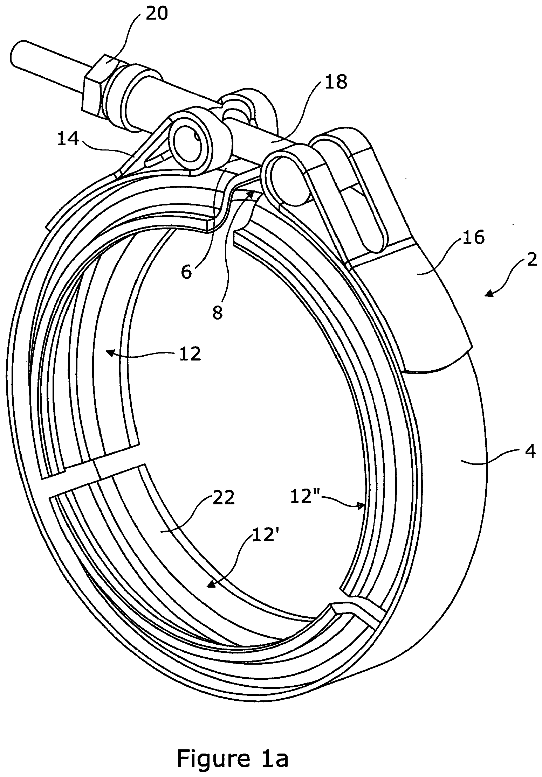

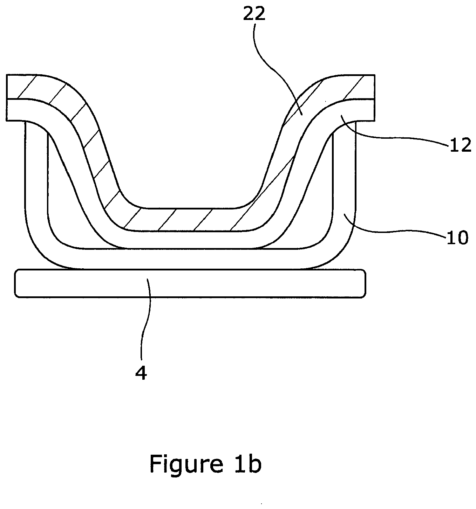

In order for the clamp to withstand the operating temperatures of the fluid flowing through the pipes on which the clamp is located, the clamp is required to be formed from a relatively expensive high grade stainless steel material. Materials that are more cost effective, such as lower grades of stainless steel, are susceptible to load failure at high temperatures and conventionally have therefore not been used. Document JPH03392489A discloses a clamping apparatus comprising a V-band 9 having an internal portion partially coated with a heat insulating material 10, see for instance the figure 1.

A further problem relates to heat loss at the junction of the clamp with the pipes. This results in equipment located downstream of the clamped pipe junction, such as for example a turbocharger and/or an exhaust system, being inefficient.

It is therefore an aim of the present invention to provide clamping apparatus that overcomes the abovementioned problem.

It is a further aim of the present invention to provide a method of use of a clamping apparatus that overcomes the above mentioned problem.

According to a first aspect of the present invention there is provided clamping apparatus according to claim 1.

Thus, the provision of thermal insulating means with the clamping apparatus helps to reduce heat loss that may otherwise take place from the at least one item that is being clamped by the clamping apparatus. This is important in some applications where heat retention of fluid that may be flowing through the at least one item in use is used to maintain volumetric flow of the fluid to an energy recovery device, such as for example a turbocharger turbine or waste heat recovery device. It results in improved efficiency of equipment located downstream of the clamping apparatus/item(s) junction. In addition, the provision of the thermal insulating means reduces the temperature the at least one clamping member may be exposed to in use. This in turn means the at least one clamping member can be formed from a more cost effective material than may otherwise have been possible.

Preferably the thermal insulating means is formed from any material or combination of materials that provides at least a thermal insulating effect (i.e. significantly reduces, prevents or substantially prevents heat conductance between two adjoining or abutting components or materials).

In one embodiment the thermal insulating means is formed from any material or combination of materials that also provides an electrical insulating effect or has electrical insulating properties.

Preferably the thermal insulating means is formed from any material or combination of materials that provides thermal insulation of approximately or at least 50°C compared to if the thermal insulating means was not provided.

Preferably the thermal insulating means is formed from any material or combination of materials that provides a thermal insulating effect at temperatures equal to or greater than 500°C.

Preferably the thermal insulating means is formed from any material or combination of materials that allows heat transfer across the same of less than 5W/mK, and further preferably is less than 2W/mK, and yet further preferably is between 1-2W/mK.

Preferably the thermal insulating means consists of or includes zirconium oxide or zirconium ceramic.

Preferably the thermal insulating means is provided at a thickness sufficient to provide a thermal insulating effect.

In one embodiment the thermal insulating means is provided at a thickness of between 0.3mm-0.5mm. Preferably the thickness is a dimension taken in a radial direction (i.e. from the item towards the clamping apparatus or from the clamping apparatus).

Preferably the thermal insulating means is formed from a material that has sufficient abrasion resistance and/or compression strength to withstand forces associated with clamping the clamping apparatus to the at least one item in use.

In one embodiment thermal insulating means are independent of and/or separate to the at least one clamping member. For example, thermal insulating means could be in the form of a member movable into abutting relationship between the clamping member and the at least one item on use of the apparatus in a clamped position. The thermal insulating means could be removable from between the at least one clamping member when in an unclamped position.

In one embodiment the thermal insulating means is provided on, integral with or associated with the outer surface of the at least one clamping member in addition being provided on or integral with with the inner or innermost surface of the at least one clamping member.

In one embodiment where the at least one clamping member includes an outer band member and an inner band member or inner band member segments, the thermal insulating means is provided on, integral with or associated with at least the inner or innermost surface of the inner band member or inner band member segments.

In one embodiment where the at least one clamping member includes an outer band member and an inner band member or inner band member segments, the thermal insulating means is provided on or integral with at least the inner or innermost surface of the inner band member or inner band member segments and, optionally the outer surface of the inner band member, the inner surface of the outer band member and/or the outer surface of the outer band member. Thus, it is envisaged that in addition to the thermal insulating means being provided on a surface of the inner band member or inner band member segments facing towards the item being clamped in use, it could also be provided on any other surface or surfaces of the inner band member and/or the outer band member to further enhance the thermal insulating effect provided by the clamping apparatus.

Preferably the thermal insulating means is provided as one or more members, coatings and/or layers on and/or between a surface of the at least one clamping member and/or at least one item.

In one embodiment the thermal insulating means comprises two or more coatings and/or layers provided on a surface of the at least one clamping member and/or at least one item.

In one embodiment the thermal insulating means is applied to the at least one surface of the at least one clamping member using plasma sputter coating technology or means, High Velocity Oxy-Fuel spray technology or means and/or the like.

In one embodiment mask means or a mask member are provided on one or more surfaces of the at least one clamping member, the clamping apparatus to mask surfaces of the same on which the thermal insulating means is not required. This is typically provided during the application of the thermal insulating means to the clamping member.

Preferably the mask means includes a cover, mask, tape and/or the like.

In one embodiment the clamping apparatus is in the form of or includes a V-Clamp, a ring clamp, a band clamp, a G-coupling, a slip joint, a flange and/or the like.

Preferably the inwardly facing surface, inner surface or innermost surface of the at least one clamping member and/or the outer surface of the at least one item is profiled, such as for example, a V, U or W shaped profile or substantially V, U or W shaped profile, and further preferably is profiled in a direction perpendicular to the diameter or radius of the at least one clamping member and/or a longitudinal axis of the at least one item.

Preferably the inwardly facing surface, inner surface or innermost surface of the at least one clamping member and/or the outer surface of the at least one item is non-planar, not flat, non-linear and/or the like, and further preferably in a direction perpendicular to the diameter or radius of the at least one clamping member and/or a longitudinal axis of the at least one item.

In the embodiment where the clamping apparatus is in the form of a V-Clamp, the clamping apparatus comprises or consists of an outer band member, and at least one inner band member or inner band member segments, and preferably two inner bands (i.e. an innermost band and an intermediate band). Preferably the innermost band consists of two or more band member segments attached to an inner surface of the outer band member or the intermediate band. The thermal insulating means is provided on or associated with an inner surface or inwardly facing surface of the two or more segments. However, the thermal insulating means could also be provided on any surface of the clamping apparatus, the outer or outwardly facing surface of the at least one inner band member and/or the two or more segments, on the inner and/or outer surface of the intermediate band, and/or on the inner and/or outer surface of the outer band member.

In one embodiment where the clamping apparatus is in the form of a ring clamp, the clamping apparatus comprises or consists of an outer band member. Preferably the thermal insulating means is provided on or associated with an inner surface or inwardly facing surface of the outer band member. Preferably the thermal insulating means is optionally also provided on or associated with the outer surface or outwardly facing surface of the outer band member.

In one embodiment where the clamping apparatus is in the form of a G coupling, the clamping apparatus comprises or consists of two or more outer band members that are hingedly or pivotably joined together. The thermal insulating means is provided on or associated with an inner surface or inwardly facing surface or the two or more outer band members. Preferably the thermal insulating means is optionally also provided on or associated with the outer surface or outwardly facing surface of the two or more band members.

In one embodiment where the clamping apparatus is in the form of a band clamp, the clamping apparatus comprises or consists of a flat band and/or annular band with a closure or adjustment mechanism or means provided on the same. The thermal insulating means is provided on or associated with an inner surface of inwardly facing surface of the flat and/or annular band. Preferably the thermal insulating means is optionally also provided on or associated with the outer surface or outwardly facing surface of the flat and/or annular band.

In one embodiment where the clamping apparatus is in the form of a slip joint, the clamping apparatus comprises or consists of a flange element for location around an item, conduit, pipe or hose, at least one clamping member, and sealing means.

Preferably the at least one clamping member, an outer band member and/or an inner band member is annular or substantially annular in form.

Preferably the inner surface or inwardly facing surface of the outer band member, the at least one clamping member and/or one or more band member segments has a V, W or U or substantially V, W or U shaped profile.

In one embodiment the at least one item being clamped, and preferably both or two of the items being clamped, is/are in the form of a conduit, pipe, hose, flange and/or the like. Preferably thermal insulating means is provided on or associated with an outer surface or outwardly facing surface of the conduit, pipe, hose, flange and/or the like. It is to be noted that the thermal insulating means could be provided on the outer surface of a remaining or non-flanged portion of the conduit, pipe or hose in addition to the flange portion.

In one embodiment the conduit, pipe, hose and/or the like is provided with an outwardly extending flange at or adjacent an end thereof. Preferably the thermal insulating means is provided on or associated with at least the outer surface of the outwardly extending flange.

The flange can be integral with the at least one item, conduit, pipe or hose or can be attached or detachably attached to the at least one item, conduit, pipe or hose.

In one embodiment the thermal insulating means, member, coating and/or layer is of uniform or substantially uniform thickness.

In one embodiment the thermal insulating means, coating and/or layer is of nonuniform thickness.

The thermal insulating means can be provided as a continuous layer or coating on the surface of the item.

Preferably the clamping apparatus and/or the at least one clamping member is movable between a clamped position, wherein the apparatus can clamp two or more items together in use, and an unclamped position, wherein the two or more items can be located with and/or removed from the clamping apparatus in use.

Preferably the ends of the clamping member are movable between the clamped position, wherein the ends are relatively closer to each other, to an unclamped position, wherein the ends are relatively further apart from each other.

Preferably the clamping apparatus includes adjustment means for allowing adjustment of the at least one clamping member or clamping apparatus and/or for allowing the clamping apparatus or at least one clamping member to be moved between the clamped and unclamped positions in use.

Preferably the adjustment means includes any or any combination of one or more trunnions, threaded trunnions, nuts, bolts, threaded screws, clips, inter-engaging members and/or the like.

Preferably the at least one clamping member is formed from any or any combination of one or more metals, stainless steel, plastic, rubber, carbon fibre and/or the like.

In one embodiment sealing means or a sealing member are provided with or associated with the clamping apparatus. The sealing means can, for example, include any suitable gasket, O-ring, sealing ring and/or the like. The sealing means may or may not be in contact with the thermal insulating means.

Preferably the sealing means is provided between an inner or inner most surface of the clamping apparatus and an outer surface of the one or more items being clamped.

According to a further aspect of the present invention there is provided a method of using clamping apparatus of the invention for clamping two or more items together according to claim 13.

Embodiments of the present invention will now be described with reference to the following figures, wherein:
Figure 1a shows a perspective view of a V-Clamp according to an embodiment of the present invention;
Figure 1b shows a a cross sectional view of a V-Clamp according to a further embodiment of the present invention;
Figures 2a and 2b show a perspective view and a cross sectional view of a conduit with a flanged end in overlapping engagement with a further conduit, not part of the present invention.
Figures 3a and 3b show a perspective view and a cross sectional view of a V-clamp according to an embodiment of the present invention; and
Figures 4a and 4b show a perspective view and a cross sectional view of a V-clamp according to a further embodiment of the present invention.

Referring firstly to figure 1a, there is illustrated clamping apparatus in the form of a V-Clamp 2 for clamping together the ends of two conduits used for the flow of hot gases therealong, such as for example exhaust gases, in use.

The V-Clamp 2 comprises two clamping members; an outer band 4 which is annular in form having two opposing ends 6, 8, each end 6, 8 having a loop portion14, 16 associated with the same; and an inner band formed from three segments 12, 12', 12". (Although three segments are shown in the figure, any number of segments could be provided). The three segments 12-12" are joined in an end to end manner with a space between each of the ends. The three segments have a V-shaped cross sectional profile and are joined to the inner surface of the outer band 4.

Each end 6, 8 of the outer band 4 is provided with a strap portion 14, 16 respectively for the location of adjustment means in the form of a trunnion 18 and a nut 20. The adjustment means allows the distance between the free ends 6, 8 and the straps 14, 16 to be adjusted, thereby increasing or decreasing the size of the band aperture and allowing the clamp 2 to be moved between an unclamped position, wherein the clamp 2 can be located over or removed from two overlapping conduits and the ends are a relatively large spaced distance apart, and a clamped position, wherein the clamp is clamped around two overlapping conduits and the ends are adjacent to each other or a relatively small spaced distance apart.

In one application of use of the V-Clamp 2, the conduits which are being clamped are arranged to allow hot exhaust gases to flow through channels defined in the same. In order to prevent the clamp 2 from becoming too hot, and in order to retain the heat of the gases within the conduit channels to maintain volumetric flow of the gases through the conduit channels, heat insulating means in the form of a zirconium oxide layer 22 is provided on the inner surface of the three segments 12, 12', 12"that face towards the conduit. The zirconium oxide layer has a thermal conductance of approximately 1.0-1.4 W/mK, thereby preventing heat from passing from the conduits to the clamp in use. The zirconium oxide layer is typically provided at a thickness of 0.3-0.5mm on the segments. However, any suitable thermal conductance or thickness of the thermal insulating means could be provided so as to provide a thermal insulating effect.

In one example the zirconium oxide layer is applied to the inner surface of the inner clamping member segments 12-12" using a High Velocity Oxy-Fuel spray technique but any suitable technique could be used.

Thus, in this embodiment the zirconium oxide layer is directly in contact with the outer surface of the outer conduit in use, thereby thermally insulates the clamp from the gases/fluids flowing in the conduits in use. It will be appreciated that the zirconium oxide layer may be indirectly in contact with the outer surface of the outer conduit in use if sealing means for example where also provided between the zirconium oxide layer and the outer conduit surface. The zirconium oxide layer retains the heat of the hot gases/fluids within the conduit, thereby maintaining the volumetric flow of the gases/fluid along the conduits in use. This allows the clamp to be formed from a lower grade stainless steel than conventional clamps, or could allow the clamp to be formed from materials other than stainless steel, such as for example other metals, rubber, plastic, carbon fibre and/or the like.

Figure 1b shows a further example of V-clamp 2 according to an embodiment of the present invention wherein an intermediate band 10 is provided between the outer band 4 and the inner band segments 12-12".

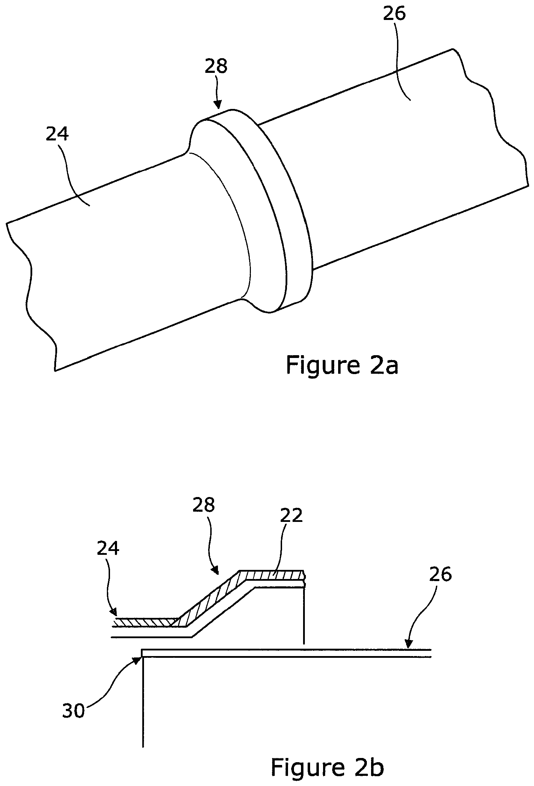

Referring to figures 2a-2b, there is illustrated an example of two items in the form of conduits 24, 26 that could be joined together by clamping apparatus, such as for example by the V-clamp shown in Figures 1a-1b in use.

One end of conduit 24 is provided with an outwardly extending flange portion 28 and the end 30 of conduit 26 is located in the channel of conduit 24. In this example in addition to the innermost surface of the clamp 2 being provided with a heat or thermal insulating layer 22, the outer surface of the flange portion 28 is provided with a heat or thermal insulating zirconium oxide layer 22. The provision of the heat insulating layer on the outer surface of the flange portion 28 of the conduit 24 provides the same benefits as the heat insulating layer being provided on the inner surface of the innermost clamping member. Thus a heat or thermal insulating layer is provided between the contacting surfaces of the conduit and clamping member to prevent heat from being transferred from the conduit to the clamping member and vice versa in use.

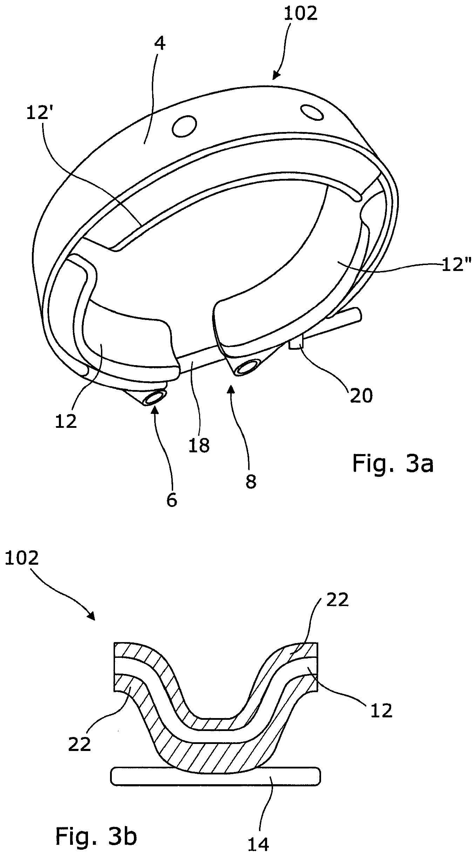

Referring to figures 3a and 3b, there is illustrated clamping apparatus 102 according to a further embodiment of the present invention in the form of a V-clamp. The same reference numerals are used to describe the same features as previously described.

The V-clamp 102 is similar in form to the V-clamp shown in figure 1a with the exception that thermal insulating means, in the form of a zirconium oxide layer, is provided on the inner surface and the outer surface of the inner band segments 12.

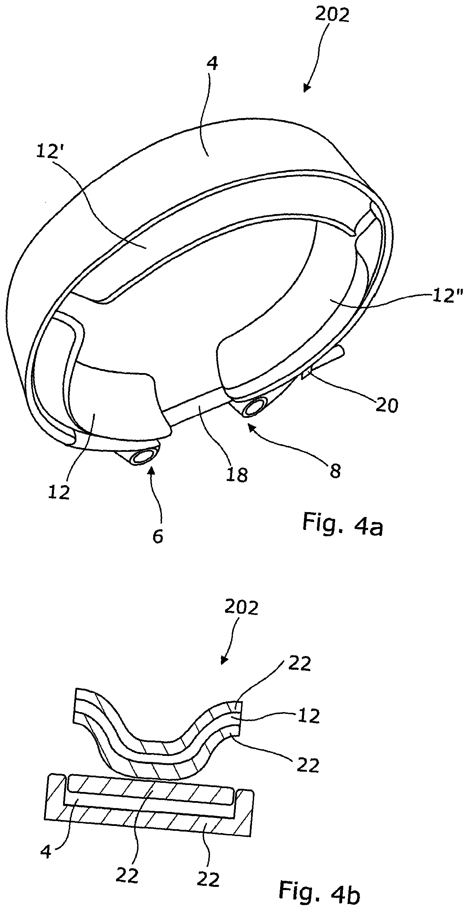

Referring to figures 4a and 4b, there is illustrated clamping apparatus 202 according to a yet further embodiment of the present invention in the form of a V-clamp. The same reference numerals are used to describe the same features as previously described.

The V-clamp 202 is similar in form to the V-clamp shown in figures 1a, 3a and 3b with the exception that thermal insulating means, in the form of a zirconium oxide layer, is provided on the inner surface and the outer surface of the inner band segments 12, in addition to the inner and outer surfaces of the outer band 4.

## Claims

1. Clamping apparatus (2, 102, 202) for clamping two or more items (24, 26) together in use, said clamping apparatus (2, 102, 202) including at least one clamping member having an inwardly facing surface, or an inner surface arranged to be brought into contact, directly or indirectly, with an outer surface of at least one of the items (24, 26) being clamped in use, and **characterised in that** thermal insulating means (22) are integral with or provided as a continuous layer or coating on the entire inwardly facing surface or inner surface of the at least one clamping member.

2. Clamping apparatus according to claim 1 wherein the thermal insulating means is formed from any material or any combination of materials that provides a thermal insulating effect at temperatures equal to or greater than 500°C;
wherein the thermal insulating means is formed from any material or any combination of materials that allows heat transfer across the same of less than 5W/mK; and/or
wherein the thermal insulating means consists of or includes zirconium oxide or zirconium ceramic.

3. Clamping apparatus according to claims 1 or 2 wherein the thermal insulating means is provided at a thickness of between 0.3mm-0.5mm.

4. Clamping apparatus according to claim 1 wherein the thermal insulating means is also provided on, integral with or associated with an outer surface of the at least one clamping member.

5. Clamping apparatus according to claim 1 wherein where the at least one clamping member includes an outer band member (4) and an inner band member or inner band member segments (12, 12', 12"), the thermal insulating means is provided on or integral with the inwardly facing, inner or innermost surface of the inner band member or inner band member segments (12, 12', 12").

6. Clamping apparatus according to claim 5 wherein the thermal insulating means is also provided on, integral with or associated with the outer surface of the inner band member or inner band member segments (12, 12', 12"), the inner surface of the outer band member (4) and/or the outer surface of the outer band member (4).

7. Clamping apparatus according to claim 1 in the form of or including a V-clamp, a ring clamp, a band clamp, a G-coupling, a slip joint and/or a flange.

8. Clamping apparatus according to claim 1 wherein the inner surface of the at least one clamping member and/or the outer surface of the at least one item (24, 26) is profiled or non-planar.

9. Clamping apparatus according to claim 1 wherein the at least one clamping member, an outer band member (4) and/or an inner band member or inner band member segments (12, 12', 12") is annular or substantially annular in form.

10. Clamping apparatus according to claim 1 wherein the apparatus (2, 102, 202) and/or the at least one clamping member is movable between a clamped position, wherein the clamping member can clamp two or more items (24, 26) together in use, and an unclamped position, wherein the two or more items (24, 26) can be located with and/or removed from the clamping apparatus (2, 102, 202) in use; and wherein adjustment means are provided for allowing the clamping apparatus (2, 102, 202) and/or the at least one clamping member to be moved between the clamped and unclamped positions in use.

11. Clamping apparatus according to claim 10 wherein the adjustment means includes any or any combination of one or more trunnions (18), threaded trunnions, nuts (20), bolts, threaded screws, clips, or inter-engaging members.

12. Clamping apparatus according to claim 1 wherein sealing means are provided with or associated with the clamping apparatus (2, 102, 202).

13. A method of using the clamping apparatus (2, 102, 202) according to any of the claims 1 to 12 for clamping two or more items (24, 26) together, said method including the step of moving at least an inner surface of at least one clamping member into contact, directly or indirectly, with an outer surface of at least one of the items (24, 26) being clamped, **characterised in that** thermal insulating means (22) are integral with or provided as a continuous layer or coating on an entire inwardly facing surface or inner surface of the at least one clamping member.

14. A method according to claim 13 wherein the thermal insulating means are applied to at least one surface of the at least one clamping member using plasma sputter coating technology or high velocity oxy-fuel spray technology.

## Patentansprüche

1. Klemmvorrichtung (2, 102, 202) zum Aneinanderklemmen von zwei oder mehr Artikeln (24, 26) im Gebrauch, wobei die genannte Klemmvorrichtung (2, 102, 202) mindestens ein Klemmelement mit einer einwärts gerichteten Oberfläche oder einer Innenfläche aufweist, die angeordnet ist, um mit einer Außenfläche von mindestens einem der Artikel (24, 26), die im Gebrauch geklemmt werden, direkt oder indirekt in Kontakt gebracht zu werden,
und **dadurch gekennzeichnet, dass** Wärmedämmungsmittel (22) in bzw. als eine ununterbrochene(n) Schicht oder Beschichtung auf der gesamten einwärts gerichteten Oberfläche oder Innenfläche des mindestens einen Klemmelements integriert oder vorgesehen sind.

2. Klemmvorrichtung nach Anspruch 1, wobei das Wärmedämmungsmittel aus einem beliebigen Material oder einer beliebigen Kombination von Materialien hergestellt ist, das/die einen Wärmedämmungseffekt bei Temperaturen von 500 °C oder darüber bietet;
wobei das Wärmedämmungsmittel aus einem beliebigen Material oder einer beliebigen Kombination von Materialien hergestellt ist, das/die einen Wärmeübergang über dasselbe von weniger als 5 W/mK zulässt; und/oder
wobei das Wärmedämmungsmittel (aus einem) Zirkonoxid oder Zirkon-Keramik besteht oder beinhaltet.

3. Klemmvorrichtung nach Anspruch 1 oder 2, wobei das Wärmedämmungsmittel mit einer Dicke zwischen 0,3 mm und 0,5 mm versehen ist.

4. Klemmvorrichtung nach Anspruch 1, wobei das Wärmedämmungsmittel auch an bzw. in bzw. mit einer Außenfläche des mindesten einen Klemmelements vorgesehen, integriert oder assoziiert ist.

5. Klemmvorrichtung nach Anspruch 1, wobei, wenn das mindestens eine Klemmelement ein äußeres Bandelement (4) und ein inneres Bandelement oder innere Bandelementsegmente (12, 12', 12") aufweist, das Wärmedämmungsmittel an bzw. in der/die einwärts gerichtete(n) innere(n) oder der/die innerste(n) Oberfläche des inneren Bandelements oder den/die inneren Bandelementsegmente(n) (12, 12', 12") vorgesehen oder integriert ist.

6. Klemmvorrichtung nach Anspruch 5, wobei das Wärmedämmungsmittel auch an bzw. in bzw. mit der/die äußere(n) Oberfläche des inneren Bandelements oder den/die inneren Bandelementsegmente(n) (12, 12', 12"), der/die Innenfläche des äußeren Bandelements (4) und/oder die/der äußere(n) Oberfläche des äußeren Bandelements (4) vorgesehen, integriert oder assoziiert ist.

7. Klemmvorrichtung nach Anspruch 1 in der Form von oder mit einer Rohrschelle, einer Ringklemme, einer Bandklemme, einer G-Kupplung, einer Gleitverbindung und/oder einem Flansch.

8. Klemmvorrichtung nach Anspruch 1, wobei die Innenfläche des mindestens einen Klemmelements und/oder der Außenfläche des mindestens einen Artikels (24, 26) mit Profil versehen oder nicht ebenflächig ist.

9. Klemmvorrichtung nach Anspruch 1, wobei das mindestens eine Klemmelement, ein äußeres Bandelement (4) und/oder ein inneres Bandelement oder innere Bandelementsegmente (12, 12', 12") ringförmig oder im Wesentlichen ringförmig ist bzw. sind.

10. Klemmvorrichtung nach Anspruch 1, wobei die Vorrichtung (2, 102, 202) und/oder das mindestens eine Klemmelement zwischen einer geklemmten Stellung, wobei das Klemmelement im Gebrauch zwei oder mehr Artikel (24, 26) aneinanderklemmen kann, und einer ungeklemmten Stellung, wobei die zwei oder mehr Artikel (24, 26) im Gebrauch in bzw. aus der Klemmvorrichtung (2, 102, 202) positioniert oder entfernt werden können, bewegbar ist; und wobei Einstellmittel zum Ermöglichen, dass die Klemmvorrichtung (2, 102, 202) und/oder das mindestens eine Klemmelement im Gebrauch zwischen der geklemmten und der ungeklemmten Stellung bewegt werden, vorgesehen sind.

11. Klemmvorrichtung nach Anspruch 10, wobei das Einstellmittel beliebige oder eine beliebige Kombination von ein oder mehr Zapfen (18), Gewindezapfen, Muttern (20), Schrauben, Gewindestiften, Clips oder ineinandergreifenden Elementen aufweist.

12. Vorrichtung nach Anspruch 1, wobei Dichtungsmittel mit der Klemmvorrichtung (2, 102, 202) versehen oder assoziiert sind.

13. Verfahren zur Verwendung der Klemmvorrichtung (2, 102, 202) nach einem der Ansprüche 1 bis 12 zum Aneinanderklemmen von zwei oder mehr Artikeln (24, 26), wobei das genannte Verfahren den Schritt des Bewegens von mindestens einer Innenfläche von mindestens einem Klemmelement in direkten oder indirekten Kontakt mit einer Außenfläche von mindestens einem der Artikel (24, 26), der geklemmt wird, aufweist, **dadurch gekennzeichnet, dass** Wärmedämmungsmittel (22) in eine bzw. als eine ununterbrochene Schicht oder Beschichtung auf einer gesamten einwärts gerichteten Oberfläche oder Innenfläche des mindestens einen Klemmelements integriert oder vorgesehen sind.

14. Verfahren nach Anspruch 13, wobei das Wärmedämmungsmittel unter Verwendung von Technologie der Plasma-unterstützten Sputterbeschichtung oder Hochgeschwindigkeits-Suspensionsflammspritz-Technologie auf mindestens eine Oberfläche des mindestens einen Klemmelements aufgebracht wird.

## Revendications

1. Appareil de serrage (2, 102, 202) pour serrer deux ou plusieurs postes (24, 26) ensemble en utilisation, ledit appareil de serrage (2, 102, 202) incluant au moins un élément de serrage ayant une surface dirigée vers l'intérieur, ou une surface interne agencée de façon à être mise en contact, directement ou indirectement, avec une surface externe d'au moins un des postes (24, 26) serrés en utilisation, et
**caractérisé en ce que** des moyens d'isolation thermique (22) font partie intégrante de ou sont prévus en tant que revêtement ou couche continu/e sur la totalité de la surface dirigée vers l'intérieur ou la surface interne de l'au moins un élément de serrage.

2. Appareil de serrage selon la revendication 1 dans lequel le moyen d'isolation thermique est formé à partir de n'importe quel matériau ou de n'importe quelle combinaison de matériaux qui fournit un effet d'isolation thermique à des températures égales à ou supérieures à 500 °C ;
dans lequel le moyen d'isolation thermique est formé à partir de n'importe quel matériau ou de n'importe quelle combinaison de matériaux qui permet un transfert de chaleur à travers celui-ci/ceux-ci de moins de 5 W/mK ; et/ou
dans lequel le moyen d'isolation thermique consiste en ou inclut l'oxyde de zirconium ou la céramique zirconium.

3. Appareil de serrage selon les revendications 1 ou 2 dans lequel le moyen d'isolation thermique est prévu à une épaisseur située entre 0,3 mm et 0,5 mm.

4. Appareil de serrage selon la revendication 1 dans lequel le moyen d'isolation thermique est également prévu sur, fait partie intégrante de ou est associé à une surface externe de l'au moins un élément de serrage.

5. Appareil de serrage selon la revendication 1 dans lequel l'emplacement où l'au moins un élément de serrage inclut un élément bande externe (4) et un élément bande interne ou des segments d'élément bande interne (12, 12', 12"), le moyen d'isolation thermique est prévu sur ou fait partie intégrante de la surface interne, ou située le plus à l'intérieur, dirigée vers l'intérieur de l'élément bande interne ou des segments d'élément bande interne (12, 12', 12").

6. Appareil de serrage selon la revendication 5 dans lequel le moyen d'isolation thermique est également prévu sur, fait partie intégrante de ou est associé à la surface externe de l'élément bande interne ou aux segments d'élément bande interne (12, 12', 12"), la surface interne de l'élément bande externe (4) et/ou la surface externe de l'élément bande externe (4).

7. Appareil de serrage selon la revendication 1 sous la forme de ou incluant une pince en V, un collier de serrage, une bande de serrage, un couplage en G, un joint glissant et/ou une bride.

8. Appareil de serrage selon la revendication 1 dans lequel la surface interne de l'au moins un élément de serrage et/ou la surface externe de l'au moins un poste (24, 26) est profilée ou non plane.

9. Appareil de serrage selon la revendication 1 dans lequel l'au moins un élément de serrage, un élément bande externe (4) et/ou un élément bande interne ou des segments d'élément bande interne (12, 12', 12") a une forme annulaire ou substantiellement annulaire.

10. Appareil de serrage selon la revendication 1, l'appareil (2, 102, 202) et/ou l'au moins un élément de serrage étant mobile entre une position serrée, dans laquelle l'élément de serrage peut serrer deux ou plusieurs postes (24, 26) ensemble en utilisation, et une position desserrée, dans laquelle les deux ou plusieurs postes (24, 26) peuvent être localisés avec et/ou retirés de l'appareil de serrage (2, 102, 202) en utilisation ; et des moyens d'ajustement étant prévus pour permettre à l'appareil de serrage (2, 102, 202) et/ou à l'au moins un élément de serrage d'être bougé entre les positions serrée et desserrée en utilisation.

11. Appareil de serrage selon la revendication 10 dans lequel le moyen d'ajustement inclut n'importe lequel ou n'importe quelle combinaison d'un ou de plusieurs éléments parmi des tourillons (18), tourillons filetés, écrous (20), boulons, vis filetées, clips, ou éléments venant mutuellement en prise.

12. Appareil de serrage selon la revendication 1 dans lequel des moyens de scellement sont prévus avec ou associés à l'appareil de serrage (2, 102, 202).

13. Procédé d'utilisation de l'appareil de serrage (2, 102, 202) selon n'importe lesquelles des revendications 1 à 12 pour serrer deux ou plusieurs postes (24, 26) ensemble, ledit procédé incluant l'étape de déplacement d'au moins une surface interne d'au moins un élément de serrage en contact, directement ou indirectement, avec une surface externe d'au moins un des postes (24, 26) serrés, **caractérisé en ce que** des moyens d'isolation thermique (22) font partie intégrante de ou sont prévus en tant que revêtement ou couche continu/e sur la totalité d'une surface dirigée vers l'intérieur ou d'une surface interne de l'au moins un élément de serrage.

14. Procédé selon la revendication 13 dans lequel les moyens d'isolation thermique sont appliqués sur au moins une surface de l'au moins un élément de serrage grâce à l'utilisation de la technologie de revêtement à projection de plasma ou de la technologie de pulvérisation à oxygène et combustible de grande vitesse.
